# EUROPEAN PATENT APPLICATION

(11) **EP 1 916 131 A1**
(43) Date of publication of application: **30.04.2008**
(21) Application number: 06380273.0
(22) Date of filing: 24.10.2006
(51) Int. Cl.: B60J 1/08

(54) **Window with emergency opening mechanism**

(71) Applicant: Diaz Gascon, Emilio, 50006 Zaragoza (ES)
(72) Inventor: Diaz Gascon, Emilio, 50006 Zaragoza (ES)
(74) Representative: Manzano Cantos, Gregorio

(57) **Abstract**

The invention relates to an automatic or semiautomatic opening mechanism with manual or remote actuation for emergency exit windows which, due to an accident or emergency situation, is actuated manually or with a remote control releasing the closure fixings by means of a non-deformable member and means for ejecting the emergency window opening it, a handle having an initial position of partial opening caused by a push-button and another position of complete opening at 90°, linked on an operating member which, when activated due to the action of the handle, triggers the ejecting means and actuates telescopic cylinders, completely opening the window upwards.

## Description

### Object of the Invention

As indicated by the title, the purpose of the object of the invention is to facilitate the opening of emergency windows of buses, coaches or other vehicles so as to facilitate the evacuation of passengers in the event of an accident; the window is opened manually by actuating a push-button, which releases a handle or lever which is also operated manually releasing the window fixing or blocking mechanisms, the window being automatically opened towards the outside driven by springs and telescopic cylinders, and such that upon actuating the push-button, it transmits a warning signal to the person in charge of the vehicle, in case it is a false alarm, to prevent the intervention of the opening lever.

Optionally, the intervention of the opening mechanism of this window can be carried out by a remote control system which completely releases the blocking lever by opening the window automatically towards the outside equally aided by the springs and the telescopic cylinders, the emergency opening signal being able to be sent by the driver himself, the guide or a passenger.

### Background of the Invention

The known art in emergency exit systems in the automotive field and particularly in buses or other vehicles generally consists of manual mechanisms, the most common being the presence of a tool (hammer) on the frame of the window indicated as the emergency window so that by using the tool, the passenger breaks or shatters the glass so as to leave the opening free.

The following documents are mentioned as the background of the opening of emergency windows: US patent 2004/0055218 A1 for "SAFETY WINDOW" of Isaac Forsyth and Neil Forsyth; EP 1101895 A2 for "EMERGENCY EXIT COMPRISING A MULTIPLE GLAZED WINDOW" of Pilkingdom Limited and more particularly EP 05380259 SMART EMERGENCY WINDOW, of Industrias E. Diaz, S.A., its inventor being the same applicant Emilio Diaz Gascón and comprising an instantaneous opening mechanism by means of a non-deformable member for releasing the closure clamps of the window so as to ensure their complete release in the event of an accident, especially designed for combinations of several units

These systems do not always meet their function, their safe operation in the event of an accident being of vital importance, and it is necessary to take into account the chaos arising in an accident; and in addition to the well-known confusion and nervousness, confusion such as the fact that the breaking element is not found in its place, or its operation is unknown, can occur, making it impossible to leave the exit space unoccupied or free in such emergencies in the event of serious accidents, which unfortunately do happen; therefore it must be understood that with respect to exit opening security, emergency windows which do not meet their function 100% cannot be used.

### Description of the Invention

The object of the invention proposed herein is a window with a semiautomatic opening system which completely departs from all that known in the prior art since it provides a double or single glass with the same features as other windows, having a pre-opening push-button either in a box or in plain view which when pushed releases the actuation lever from its initial state to an approximate 30° run, but without blocking the window and warning the driver or the person in charge of the transport means with an acoustic and/or luminous signal, so that the handle is not actuated if it is a false alarm. If the alarm is real, the handle will be shifted to its maximum approximate 90° run, releasing the locks of the window and being opened automatically and completely, initially aided by ejectors applying continuous pressure on the window and also by telescopic or cushioning cylinders allowing, due to the hinging on their upper side, the individual upwards opening of the window. The opening device can optionally be operated through a commercial, electronic or pneumatic device or any other means, synchronized with a remote control releasing the window closing mechanism, automatically causing the opening thereof with the aforementioned means.

### Description of the Drawings

To complete the description being made and for the purpose of aiding to better understand the features of the invention, a set of drawings is attached as an integral part thereof in which the following has been depicted with an illustrative and non-limiting character:

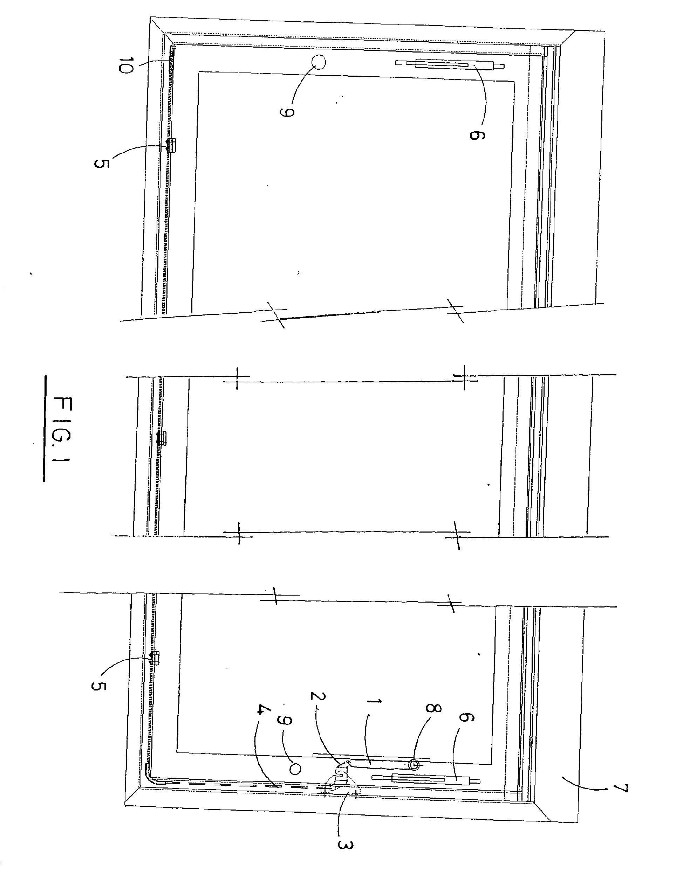

Figure 1 shows the window assembly seen from inside the vehicle, showing the frame (7) having the opening lever (1) attached at one side, which opening lever is retained at its upper end by the push-button assembly (8), linked at the other end with the end of the reciprocating support or connecting rod (2), whereas in the lower end it has a non-deformable member (4) fixed thereto, released by the mobile closing fingers (5); this non-deformable member (4) is in turn fixed at its end length on the opposite side of the frame by a cushioning spring (10); a shaft (2.1)(not shown) links on the central part of the reciprocating support or connecting rod (2), on the fixed support (3) which is joined inside the frame (7). The telescopic cylinders (6) and the springs (9) make the emergency window open when the opening mechanism is released.

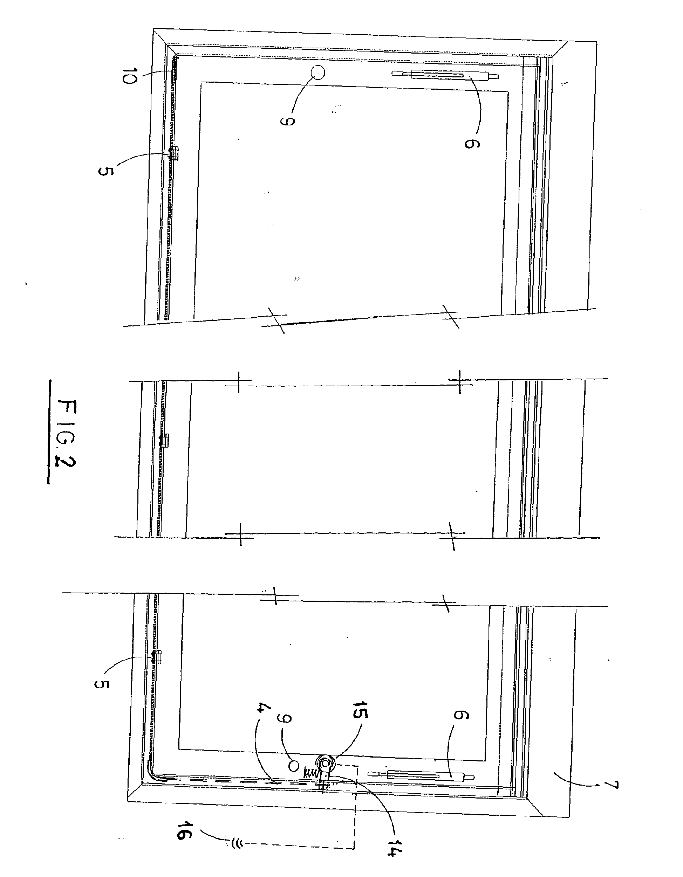

Figure 2 shows the window assembly with the opening carried out by commercial remote control, with the electronic locking device (15) of the connecting rod or cam (14), with the release through the remote control (16).

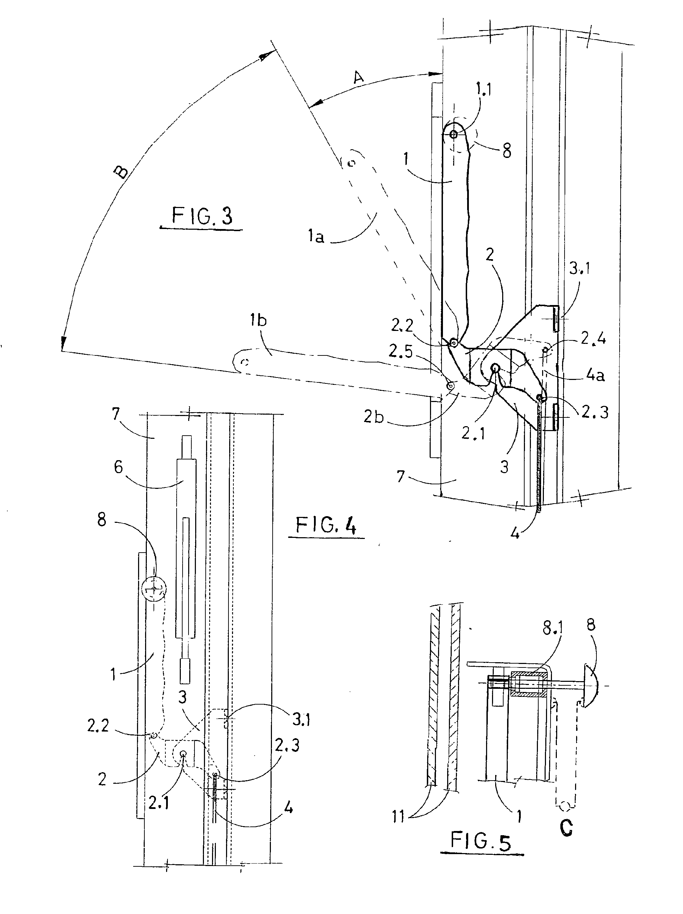

Figure 3 shows in detail the semiautomatic mechanism with a manual actuation for opening the emergency window, the handle (1) being in the rest position in position (1.1), by the push-button assembly (8) which when actuated partially opens the handle (1) to position (1a) through the linking element (2.5) with run (A); the handle (1) is manually moved with run (B) to position (1b), with the linkage (2.5) being moved, rotating on the small shaft (2.1) supported on the fixed support (3). With the movement (B) of the handle (1) to position (1b), the other end of the reciprocating support (2) on which the non-deformable member (4) is supported passes to position (2.4); therefore it raises said member (4) to position (4a), which allows unblocking the closing fingers (5), not shown in this figure.
Figure 4 shows the semiautomatic opening system according to the previous figure, the handle (1) being in the rest position and blocked by the push-button assembly (8), the ejector telescopic cylinder (6) being observed.
Figure 5 shows a detailed section of the push-button (8) with its supporting assembly (8.1) in the blocking position of the handle (1), the double glass framework (11) and the pre-warning scheme (C) for warning the person in charge of the vehicle being observed.

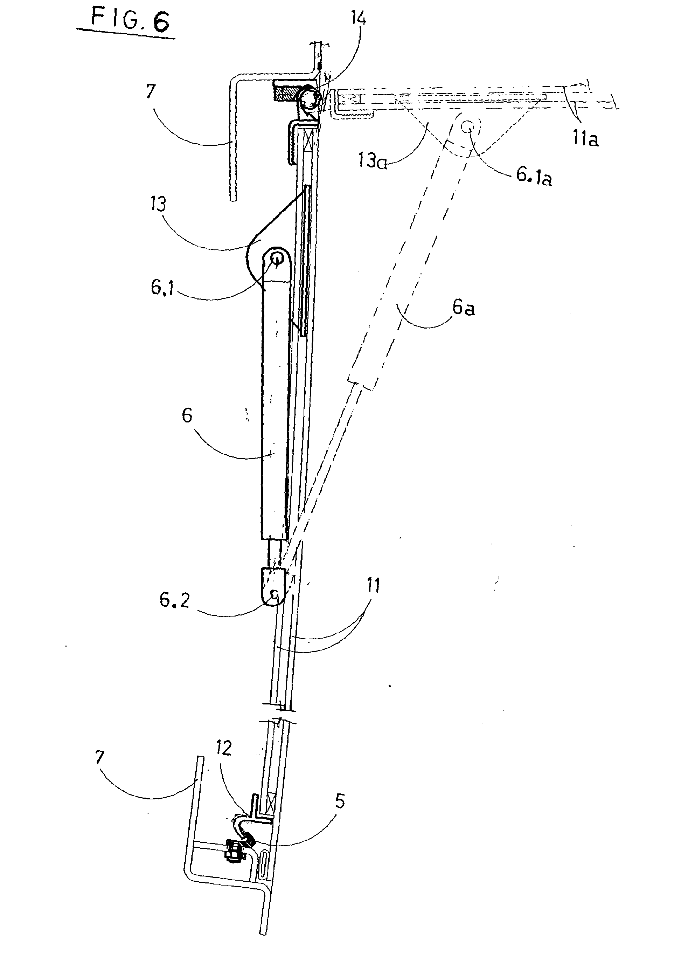

Figure 6 shows a side section of the window assembly with the fixed frame (7) and the opening movement of the double glass framework (11) hinged on the upper assembly (14), while the telescopic cylinder (6) swings over point (6.1) supported on the support (13) which is joined to the lowerable glass (11), whereas a small shaft (6.2) supported on the lower part of the frame (7) swings at the other end of the telescopic cylinder. When the unblocking button (8) is pushed and the handle (1) is opened to its maximum run (1b), the mobile closing fingers (5) release the hooks or fixed closing fingers (12), therefore the springs (9) and the telescopic cylinders (6) raise the glass framework (11) to position (11a), whereas the telescopic cylinders, their supports and rotations raise it to positions (6a) (13a) and (6.1a), respectively.

### Preferred Embodiment of the Invention

In view of these figures and reference numbers, it can be observed that the automatic or semiautomatic system with manual or remote actuation for the operation of emergency windows basically contains a mechanism with a handle (1) linked through a reciprocating support or connecting rod (2) which can in turn be linked on a fixed support (3), whereas at the other end of the reciprocating support or connecting rod (2) there is a non-deformable member (4), braided steel cable, extending to the lower part of the frame (7) in the area of where it is fixed through the spring (10), and in this lower intermediate area the mobile fingers or closures (5) are arranged in a fixed manner to the non-deformable member (4), which fingers or closures are secured with fixed hooks or closures (12) on the frame (7), closing the window (11) safely and firmly. The semiautomatic opening with manual control in an emergency is carried out when the push-button (8) releasing the mechanisms for fixing or blocking the glass framework (11) is pressed or pulled, the latter opening towards the outside and upwards driven by springs (9) and telescopic cylinders (6); on the other hand, when the push-button (8) is pressed or pulled, a warning signal is transmitted to the person in charge of the vehicle so that the release of the operating handle (1) is not allowed in case it is a false alarm.

The automatic opening of this window can optionally be carried out by a commercial remote control (16), handled by the driver, the guide or an authorized passenger in order to release the electronic blocking mechanisms (15) as a pre-opening or completely through the lever or connecting rod (14), automatically opening the window towards the outside by the springs (9) and the telescopic cylinders (6).

Having sufficiently described the nature of the invention, taking into account the terms in which it has been drafted which must be considered in a broad and non-limiting sense, as well as the description of putting it into practice, and showing that it is a positive technical advancement in the manufacture of automatic or semiautomatic opening systems with manual or remote actuation for emergency exit windows, therefore the registration of this patent of invention is requested, the essence of said invention being that which is specified below in the following claims.

## Claims

1. An automatic or semiautomatic opening mechanism with manual or remote actuation for emergency exit windows which, due to an accident or emergency situation, is actuated manually or with a remote control releasing the closure fixings by means of a known non-deformable member (EP 05380259) and means for ejecting the emergency window opening it, **characterized in that** it has an operating handle (1) attached to a side of the fixed frame (7) of the window having an initial position of partial opening (1.a) caused by a push-button (8) and another position of complete opening at 90° (1.b), retained at one end (1.1), and linked on the reciprocating support or connecting rod (2) at one end on the shaft (2.2), whereas at the other end the reciprocating support or connecting rod (2) has a central linking shaft (2.1) through the fixed support (3) secured on the side of the frame (7) by the securing means (3.1), whereas at the other end (2.3) of the connecting rod (2) it has a non-deformable member (4) fixed thereto which, extended to its end on the opposite side of the frame (7), is secured to a corresponding shock-absorbing spring (10), and in its lower run has respective closures (5) in the clamping fingers (12).

2. An automatic or semiautomatic opening mechanism with manual or remote actuation for emergency exit windows according to claim 1, wherein the operating mechanism or handle (1) is **characterized in that** it has a push-button assembly (8) which when pressed or pulled transmits a partial pre-opening warning (C) to the person in charge of the vehicle, the handle (1) carrying out a run (A) to position (1.a), run (B) being carried out manually, locating the handle (1) at (1.b) with complete opening and the connecting rod (2) being located in the linked position (2.5), whereas at the other end of the connecting rod (2) it passes to the swinging position (2.4), moving the non-deformable member (4) to position (4.1), releasing the closures (5) from the clamping fingers (12).

3. An automatic or semiautomatic opening mechanism with manual or remote actuation for emergency exit windows according to claim 1, **characterized in that** the opening ejecting means have, at the front part on the outside of the fixed frame (7) of the window, ejector springs (9) and telescopic springs (6) linked at one end on the shaft (6.2) and at the other end on the linkage (6.1), being supported in the support (13) joined to the lowerable glass framework (11) of the window (7), once the mobile closures (5) are unhooked, the ejectors (9) and the telescopic cylinders (6) raise the glass framework (11) upwards rotating in the upper side thereof on the hinge assembly (14) to the complete opening position (11a).

4. An automatic or semiautomatic opening mechanism with manual or remote actuation for emergency exit windows according to claims 1 and 3, wherein the unblocking of the handle (1) from the operating members is **characterized in that** it can optionally be carried out by means of a commercial remote control system (16) through the electronic device (15), either in a partial action (1.a) or complete action (1.b) phase of the mechanism with the direct opening of the glass framework (11).

## Amended claims

### Amended claims in accordance with Rule 137(2) EPC.

**1.** An automatic or semiautomatic opening mechanism with manual or remote actuation for emergency exit windows which, due to an accident or emergency situation, is actuated manually or with a remote control releasing the closure fixings by means of a known non-deformable member (EP 05380259) and means for ejecting the emergency window completely opening it, **characterized in that** it has an operating handle (1) attached to a side of the fixed frame (7) of the window (11), adopting an initial position of partial opening (1.a) caused by a push-button (8) and, released, another position of complete opening at 90° (1.b), retained at one upper end (1.1), and linked below on the reciprocating support or connecting rod (2) at one lower end on the shaft (2.2), whereas at the other end the reciprocating support or connecting rod (2) has a central linking shaft (2.1) -swinging- through the fixed support (3) secured on the adjacent side of the frame (7) by the securing means (3.1), whereas at the other inner end (2.3) of the connecting rod (2) it has a vertically and longitudinally non-deformable member (4) fixed thereto which, extended to its end on the opposite side of the frame (7), is being secured to a corresponding shock-absorbing spring (10), and in its lower run, passing through respective closures (5) in the clamping fingers (12) of the window (11).

**2.** An automatic or semiautomatic opening mechanism with manual or remote actuation for emergency exit windows according to claim 1, wherein the operating mechanism or handle (1) and push-button assembly (8) is **characterized in that** it has a push-button assembly (8) which when pressed or pulled it causes a partial pre-opening warning (C) to the person in charge of the vehicle, the handle (1) carrying out an initial run (A) to position (1.a), manually carrying out run (B), locating the handle (1) at (1.b) with complete opening and the connecting rod (2) being located in at a downward linked position (2.5), whereas at the other inner end of the connecting rod (2) it passes to the upward swinging position (2.4), moving the non-deformable member (4) to position (4.1), releasing the closures (5) from the clamping fingers (12) of the window (11) which opens completely.

**3.** An automatic or semiautomatic opening mechanism with manual or remote actuation for emergency exit windows according to claim 1, **characterized in that** the opening ejecting means of the window (11) have, at the front part on the outside of the fixed frame (7) of the window (11), ejector springs (9); and on the sides of the frame (7) of the telescopic springs (6) linked at one lower end on the shaft (6.2) and at the other end on the linkage (6.1), being supported in the support (13) joined to the lowerable glass framework (11) of the window (7) (1), once the mobile closures (5) are unhooked, the ejectors (9) and the telescopic cylinders (6) raise raising it the glass framework (11) upwards rotating in the upper side thereof on the hinge assembly (14) to the complete opening position (11a).

**4.** An automatic or semiautomatic opening mechanism with manual or remote actuation for emergency exit windows according to claims 1 and 3 2, wherein the unblocking (8) of the handle (1) from the operating members (2) is **characterized in that** it can optionally be carried out by means of a commercial remote control system (16) through the electronic device (15), either in a partial action (1.a) or complete action (1.b) phase of the mechanism with the direct opening of the glass framework (11).
